# EUROPEAN PATENT APPLICATION

(11) **EP 3 854 615 A1**
(43) Date of publication of application: **28.07.2021**
(21) Application number: 21152431.9
(22) Date of filing: 20.01.2021
(51) Int. Cl.: B60G 17/0165, B60G 99/00

(54) **AGRICULTURAL VEHICLE WITH AN ACTIVE SUSPENSION SYSTEM BASED ON SOIL SURFACE 3D MAPPING**

(30) Priority: 21.01.2020 IT 202000001072
(71) Applicant: CNH Industrial Italia S.p.A., 10135 Torino (IT)
(72) Inventor: Di Cecilia, Luca, 41123 Modena (MO) (IT); Lenzini, Nicola, 41027 Pievepelago (MO) (IT)
(74) Representative: CNH Industrial IP Department

(57) **Abstract**

Agriculture vehicle (1) wherein a vehicle body (3) is provided with a cab (4) with a seat (5) for the operator and has an active suspension system (7) for the front wheels (8) and the cab (4) that is designed to regulate the stiffness of the suspension based on control signals. At least one 3D sensor (13) is carried by the agricultural vehicle (1) and designed to acquire a collection of points referred to an internal reference system and representing the ground surface (15) located in front of the agriculture vehicle (1). An electronic unit (10) defines a first/second surface mapping (M1,M2) representing the ground where first/second side wheels are supposed to pass following the movement of the vehicle. The electronic unit merges the first and the second surface mapping (Ml, M2) with information of the agricultural vehicle to produce the control signal for the active suspensions system, in order to foresee the shape and the position of the obstacles (17) on the ground and modify the characteristic of the active suspension system (7) before the contact of the wheels with the obstacles to counter-balance the excitation coming from the contact among obstacles and the first side wheels and the second side wheels respectively.

## Description

### TECHNICAL FIELD

The present invention relates to an agricultural vehicle with an active suspension system based on soil surface 3D mapping.

### BACKGROUND OF THE INVENTION

One of the main problems in agricultural vehicles is related to the comfort of the operator when the agricultural vehicle is moving on rough ground, for example after plowing or during off-road transport. In fact, when driving on rough ground, the operator is exposed to high vibrations values.

Operator comfort is an important factor for agricultural vehicles as tractors, since the user may drive/work on the machine for several hours per day.

More specifically, **ISO 2631-1** sets limit values to vibrations transferred to the human body.

However, in several operative conditions, suspension system of the agricultural vehicle does not permit to be compliant with the **ISO 2631-1.**

Semi-active or active suspension systems have been developed to damp cab accelerations and oscillations and to reduce the vibrations applied to the body of the operator, thus improving driving comfort on rough ground.

However, semi-active and active system still have an unsuitable response time and cannot compensate short vibration.

Scope of the present invention is to provide an agricultural vehicle in which the effect of vibrations on the operation may be reduced by means of an active system that cooperates with a vision 3D sensor that scan the ground around the vehicle.

### SUMMARY OF THE INVENTION

The above aim is obtained by the present invention that relates to an agricultural vehicle with an active suspension system based on soil surface 3D mapping as described in claim 1.

### BRIEF DESCRIPTION OF DRAWINGS

For a better understanding of the present invention, a preferred embodiment is described in the following, by way of a non-limiting example, with reference to the attached drawings wherein:
Figure 1 shows schematically an agricultural vehicle with an active suspension system based on the ground surface 3D mapping realized according to the present invention; and
Figure 2 shows the working principle of the agricultural vehicle of claim 1.

### DETAILED DESCRIPTION OF THE INVENTION

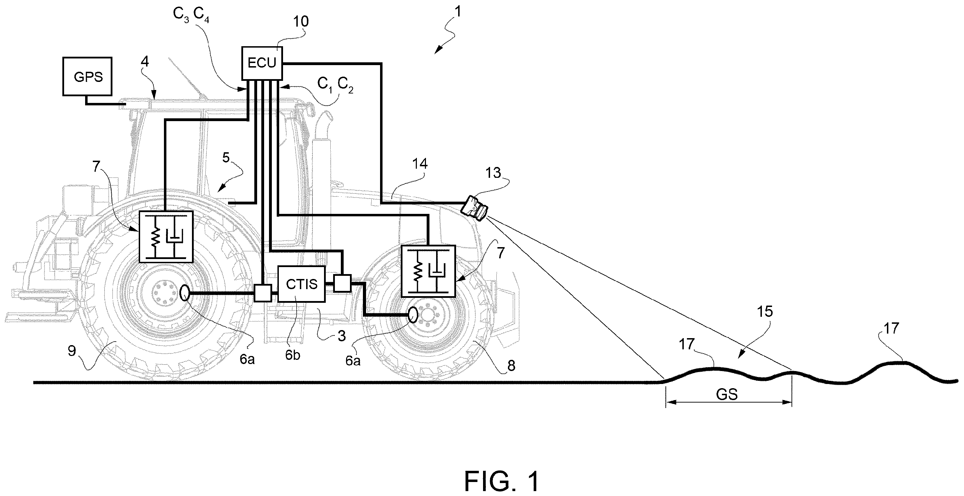

Numeral 1 indicates, as a whole, an agriculture vehicle (a tractor for instance) having a vehicle body 3 provided with a cab 4 with a seat 5 for the operator (driver, not represented). The vehicle is further provided with a system 6a for monitoring the pressure of the tires and with and inflation system 6b for modifying tire pressure (the above system 6a, 6b are of known kind and are shown schematically in figure 1).

The vehicle 1 has an active suspension system 7 (of known kind, represented schematically) for the front wheels 8 and for the cab 6 (rear suspension is located between the cab 4 and the rear tires 9) that is designed to regulate the stiffness of the suspension based on control signals. The seat 5 is also provided with a suspension system of active kind whose stiffness may be electronically regulated.

An onboard electronic control unit 10 generates respective control signals C1, C2, ... Cn for the active suspension system 7, the suspension system of the seat 5 and system 6b controlling the pressure of the tires 8 and 9.

The active suspension system 7 controls the vertical movement of the wheels 8, and cab 4 relative to the vehicle body 3. For instance, the active suspension 7 allows changing the stiffness of all wheel 8 and cab 4 suspensions independently.

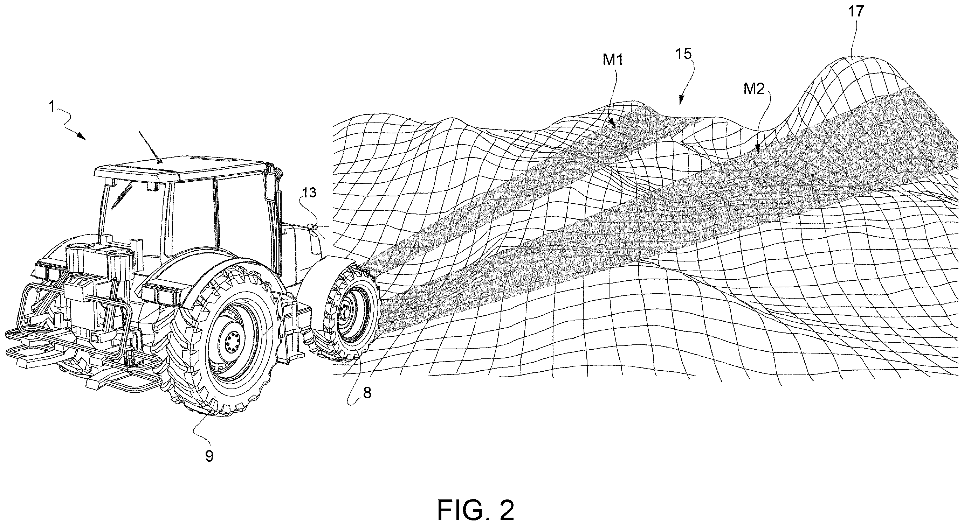

According to the present invention the agricultural vehicle 1 comprises at least one 3D sensor 13 carried by a front portion of the agricultural vehicle (hood 14, or roof 4 for instance) and designed to acquire data such as for example a point cloud (we refer to figure 2) referred to an internal reference system and representing the ground surface (GS) 15 located in front of the tractor 1. Such point cloud may be preferable georeferenced with a GPS 18. In addition the 3D sensor can identify the type of soil ahead and estimate its stiffness (e.g. rock, sand, mud, clay, grass...) by means of known techniques.

The 3D sensor could comprises one or more of the following sensors:
- LIDAR;
- RADAR;
- StereoCamera;
- Ultrasonic sensor;
- TOF Camera;

The electronic unit 10 is designed to elaborate the point cloud and define:
a first surface mapping (M1) representing the ground where first side wheels 8,9 (for instance right wheels) are supposed to pass following the movement of the vehicle 1; and
a second surface mapping (M2) representing the ground where second side wheels 8,9 (for instance left wings) are supposed to pass following the movement of the vehicle 1.

In addition, the electronic unit 10 may be designed to receive and elaborate further data such as satellite fields maps in order to improve the calculation of the first and the second surface mapping M1,M2.

The electronic unit 10 is further designed to receive information of the agricultural vehicle such as physical parameters of the vehicle (dimensions, for instance distance between wheels 8, 9 axle, position of the sensor 13 with respect to the axles) and working parameters of the vehicle (for instance vehicle speed, load, etc.) .), information on attached implements if any and information characterizing the type of soil ahead (e.g. rock, sand, mud, clay, grass).

The electronic unit 10 is designed to merge the first and the second surface mapping (M1, M2) and the information of the agricultural vehicle and/or implements and/or type of soil to produce the control signals C1, C2 ...Ci ..., Cn for the active suspensions system 7, the suspension system of the seat 5 and the system 6b controlling the pressure of the tires 8 and 9.

The surface mapping system allows the electronic unit to foresee the shape and the position of the obstacles 17 on the ground and thus to modify the characteristic of the active suspension system 7, the suspension system of the seat 5 or regulate the tires pressure before the contact of the wheels 8,9 with the obstacles 17, accordingly. This allows to counter-balance the excitation coming from the contact among obstacles 17 and the first side wheels and the second side wheels 8, 9, respectively.

Let's consider the example of a symmetric obstacle 17 (positive bumps) for both wheels 8,9: in this case, the active suspension system can raise or lower both the front wheels 8 and the cab 4, following the detected bump profile obtained by surface mapping (M1, M2).

Another example can be represented by an asymmetric obstacle 17 (e.g. bump only on one side of the vehicle): in this case, to properly manage the damping of the suspension the system should set a lower damping during the positive slope and a higher damping during negative slope.

As above outlined, the damping system can also actively regulate in real time the suspension system of the seat 5 to smooth out the vehicle accelerations transmitted to the driver and caused by the contact of the first side wheels and the second side wheels with obstacles when the vehicle 1 is moving on uneven terrain surface.

As above outlined the damping system can also actively regulate the pressure of the tires of the wheels 8,9 in real-time to smooth out the vehicle accelerations caused by the contact of the first side wheels and the second side wheels with obstacles when the vehicle is moving on uneven terrain surface. Tires pressure could also be set a-priori if the terrain conditions are known beforehand.

The agricultural vehicle 1 reduces vehicle oscillations and vibrations, leading to a noticeable improvement in the operator comfort. In addition, the wearing of some cab components could be slowed down given the reduced amount of shocks/vibrations.

## Claims

1. Agricultural vehicle (1) wherein a vehicle body (3) is provided with a cab (4) and has an active suspension system (7) for the front wheels (8) and the cab (4) that is designed to regulate the stiffness of the suspension based on control signals, **characterized in that** said agricultural vehicle (1) comprises:
one or more 3D sensors (13) carried by the agricultural vehicle (1) and designed to acquire data representing the ground surface (15) located in front of the agriculture vehicle (1);
an electronic unit (10) designed to elaborate such data for defining:
a first surface mapping (M1) representing the ground where first side wheels are supposed to pass following the movement of the vehicle;
a second surface mapping (M2) representing the ground where second side wheels are supposed to pass following the movement of the vehicle;
said electronic unit being designed to produce the control signal for said active suspensions system based on the first (M1) and the second surface mapping (M2) and further based on said information of the agricultural vehicle in order to foresee the shape and the position of the obstacles (17) on the ground and to modify the characteristic of the active suspension system (7) before the contact of the wheels with the obstacles to counter-balance the excitation coming from the contact among obstacles and the first side wheels and the second side wheels respectively.

2. Agricultural vehicle as defined in claim 1, wherein said 3D sensor (13) comprises a LIDAR sensor.

3. Agricultural vehicle as defined in claim 1, wherein said 3D sensor (13) comprises a RADAR sensor.

4. Agricultural vehicle as defined in claim 1, wherein said 3D sensor (13) comprises a Stereo Camera sensor.

5. Agricultural vehicle as defined in claim 1, wherein said 3D sensor (13) comprises a ULTRASOUND sensor.

6. Agricultural vehicle as defined in claim 1, wherein said 3D sensor (13) comprises a TOF camera sensor.

7. Agricultural vehicle as defined in claim 1, further comprising GPS system (18) wherein said electronic unit (10) is designed to elaborate further data such as geo referenced satellite fields maps in order to improve the calculation of the first and the second surface mapping (M1,M2).

8. Agricultural vehicle as defined in any of the preceding claims, comprising a system (6a) for monitoring the pressure of the tires and an inflation system (6b) for modifying tire pressure; the electronic unit (10) is designed to control said inflation system (6b) for regulating tire pressure in real-time, to counter-balance the excitation coming from the contact among obstacles and the first side wheels and the second side wheels respectively.

9. Agricultural vehicle as defined in any of the preceding claims, further comprising a seat (5) for an operator and said vehicle comprising an active suspension system of said seat (5) designed to regulate its stiffness, wherein the electronic unit (10) is designed to control said active suspension system of the seat (5) for regulating its stiffness in real-time, to counter-balance the excitation coming from the contact among obstacles and the first side wheels and the second side wheels respectively and reduce vibrations transmitted to the driver.

10. Agricultural vehicle as defined in any of the preceding claims, wherein said electronic unit (10) is further designed to receive data provided by said 3D sensor, said data characterizing the type of soil ahead of the vehicle for controlling said active suspension system.

11. Agricultural vehicle as defined in claim 10, wherein said data characterizing the type of soil provides information on the presence of at least one of rocks, sand, mud, clay, or grass.

12. Agricultural vehicle as defined in one of the preceding claims, wherein said data acquired by said at least one 3D sensor is a point cloud referred to an internal reference system.

13. Agriculture vehicle as defined in one of the preceding claims wherein said electronic unit (10) being further designed to produce the control signal for said active suspensions system information further based on the speed or the load of the vehicle.
